# EUROPEAN PATENT APPLICATION

(11) **EP 4 026 637 A1**
(43) Date of publication of application: **13.07.2022**
(21) Application number: 21213328.4
(22) Date of filing: 09.12.2021
(51) Int. Cl.: B22F 12/13, B22F 10/28, B33Y 30/00, B33Y 50/02, B22F 10/85

(54) **THREE-DIMENSIONAL POWDER BED FUSION ADDITIVE MANUFACTURING APPARATUS**

(30) Priority: 07.01.2021 JP 2021001226
(71) Applicant: Jeol Ltd., Akishima-shi, Tokyo 196-8558 (JP)
(72) Inventor: SHIMIZU, Takayuki, Akishima, 196-8558 (JP)
(74) Representative: Boult Wade Tennant LLP

(57) **Abstract**

Provided is a three-dimensional powder bed fusion additive manufacturing apparatus capable of protecting a window provided in a chamber without using a colored film.

A three-dimensional powder bed fusion additive manufacturing apparatus (10) includes a chamber (12) provided inside with a stage (22) for forming a three-dimensional build object, a window (39) provided in the chamber (12) for observation of the inside of the chamber (12), and a shutter (42) arranged inside the chamber (12) to open and close the window (39).

## Description

### BACKGROUND

### Technical Field

The present invention relates to a three-dimensional powder bed fusion additive manufacturing (PBF-AM) apparatus.

### Related Art

In recent years, a three-dimensional PBF-AM apparatus has been developed which irradiates metal powder spread on a stage with an electron beam to melt and solidify the powder, and sequentially stacks solidified layers by moving the stage to form a three-dimensional build object.

Regarding the three-dimensional PBF-AM apparatus, for example, Patent Literature 1 describes a technique in which a window is provided in a vacuum chamber, and temperature distribution of a surface layer in a powder bed is recorded through the window. Patent Literature 1 also describes a technique for protecting the window with a film and feeding the film along the window to maintain transparency of the window.

### Citation List

### Patent Literature

Patent Literature 1: JP 2003-531034 A

### SUMMARY

However, the techniques described in Patent Literature 1 have the following problems.

In a case where the powder is melted in the three-dimensional PBF-AM apparatus, the temperature inside the chamber is high, and the film for protecting the window is thus required to have heat resistance. However, since a film having heat resistance is generally colored, the film is not suitable for observation of the inside of the chamber.

The present invention has been made to solve the above problems, and an object thereof is to provide a three-dimensional PBF-AM apparatus capable of protecting a window provided in a chamber without using a colored film.

A three-dimensional powder bed fusion additive manufacturing apparatus according to the present invention includes a chamber provided therein with a stage for forming a three-dimensional build object, a window provided in the chamber for observation of the inside of the chamber, and a shutter arranged inside the chamber to open and close the window.

According to the present invention, a window provided in a chamber can be protected without using a colored film.

### BRIEF DESCRIPTION OF DRAWINGS

FIG. 1 is a side cross-sectional view schematically illustrating a configuration of a three-dimensional PBF-AM apparatus according to an embodiment of the present invention;
FIG. 2 is a schematic view of the three-dimensional PBF-AM apparatus illustrated in FIG. 1 as viewed in direction A;
FIG. 3 is a longitudinal cross-sectional view illustrating a main part of the three-dimensional PBF-AM apparatus according to the embodiment of the present invention;
FIG. 4 is a view illustrating a state in which a window is closed by a shutter;
FIG. 5 is a view illustrating a state in which the window is opened by the shutter;
FIG. 6 is a schematic side cross-sectional view illustrating arrangement of a shutter mechanism;
FIG. 7 is a perspective view of the arrangement of the shutter mechanism as viewed further from the upper side than an upper wall of a chamber;
FIG. 8 is a perspective view of the arrangement of the shutter mechanism as viewed further from the lower side than the upper wall of the chamber;
FIG. 9 is a block diagram illustrating a configuration of a shutter control circuit according to the embodiment of the present invention; and
FIG. 10 is a flowchart illustrating a method for forming a build object using the three-dimensional PBF-AM apparatus according to the embodiment of the present invention in order of steps.

### DETAILED DESCRIPTION

Hereinbelow, an embodiment of the present invention will be described in detail with reference to the drawings. In the present specification and the drawings, elements having substantially the same function or configuration are denoted by the same reference signs, and redundant description is omitted.

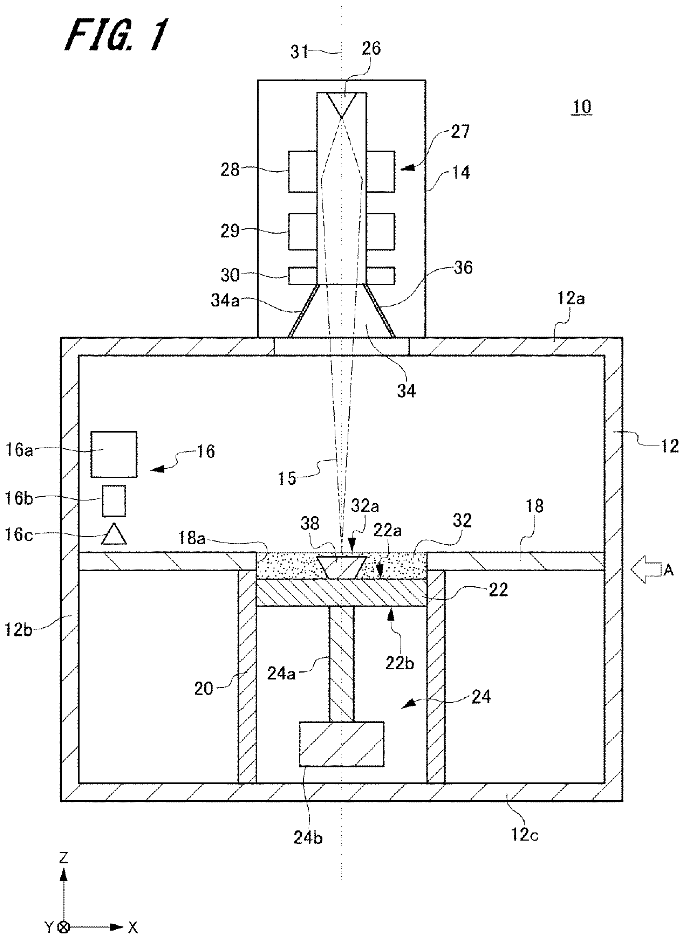

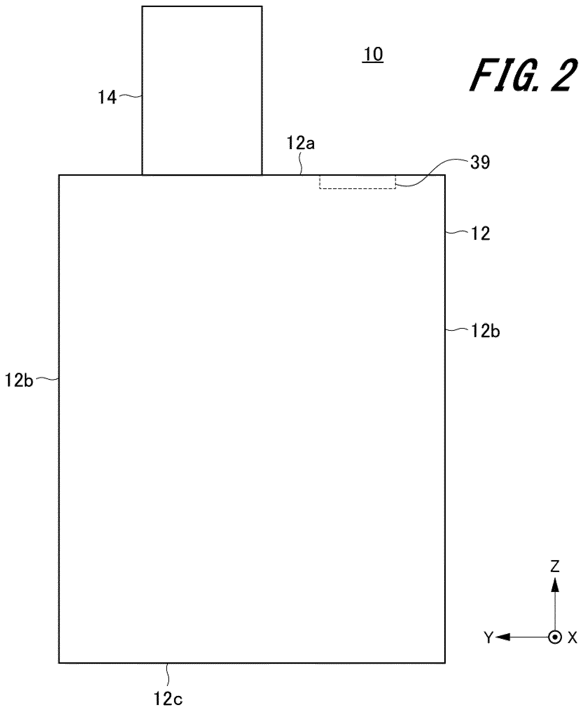

FIG. 1 is a side cross-sectional view schematically illustrating a configuration of a three-dimensional PBF-AM apparatus according to an embodiment of the present invention. FIG. 2 is a schematic view of a three-dimensional PBF-AM apparatus 10 illustrated in FIG. 1 as viewed in direction A.

In the following description, in order to clarify the shape, positional relationship, and the like of each unit of the three-dimensional PBF-AM apparatus, the right-left direction in FIG. 1 is referred to as an X direction, the depth direction in FIG. 1 is referred to as a Y direction, and the up-down direction in FIG. 1 is referred to as a Z direction. The X direction, the Y direction, and the Z direction are directions perpendicular to each other. Also, the X direction and the Y direction are parallel to the horizontal direction, and the Z direction is parallel to the vertical direction. The definitions of the directions are similar in the other drawings.

As illustrated in FIG. 1, the three-dimensional PBF-AM apparatus 10 includes a chamber 12, a beam irradiation device 14, a powder supply device 16, a build table 18, a build box 20, a stage 22, and a stage moving device 24. The powder supply device 16, the build table 18, and the stage 22 are arranged inside the chamber 12.

The chamber 12 is a chamber that creates a vacuum state by evacuating air in the chamber by means of a not-illustrated vacuum pump, that is, a vacuum chamber. The chamber 12 includes an upper wall 12a, a side wall 12b, and a bottom wall 12c. The upper wall 12a and the bottom wall 12c are opposed to each other in the Z direction.

The beam irradiation device 14 is a device that irradiates a build surface 32a with an electron beam 15. The build surface 32a is equivalent to the upper surface of powder 32 spread on the stage 22. The beam irradiation device 14 includes an electron gun 26 that serves as a generation source of the electron beam and an optical system 27 that controls the electron beam 15 generated by the electron gun 26.

The optical system 27 includes a focusing lens 28, an objective lens 29, and a deflection lens 30. The focusing lens 28 is a lens that focuses the electron beam 15 generated by the electron gun 26. The objective lens 29 is a lens that focuses the electron beam 15 focused by the focusing lens 28 on the build surface 32a. The deflection lens 30 is a lens that deflects the electron beam 15 to cause the electron beam 15 focused by the objective lens 29 to be scanned over the build surface 32a. Note that the beam is not limited to the electron beam, and may be a laser beam. In addition, the arrangement of the lenses 28, 29, and 30 in the optical system 27 can be changed as necessary, and the configuration of the optical system 27 can also be changed as necessary.

The beam irradiation device 14 is attached to the upper wall 12a of the chamber 12. The beam irradiation device 14 is arranged so that a center axis 31 of the electron gun 26 and the optical system 27 is parallel to the Z direction. The lower end portion of the beam irradiation device 14 is provided with a beam emission port 34. The beam emission port 34 is an opening that causes the electron beam 15 controlled by the optical system 27 to be emitted. That is, the electron beam 15 is emitted from the beam emission port 34. The beam emission port 34 may be formed in an optical component (such as a lens) that controls the electron beam 15, or may be formed in a chassis that holds the optical component.

The beam emission port 34 is formed in a circular shape as viewed in the direction of the center axis of the optical system 27. The beam emission port 34 is formed in a shape in which the diameter gradually increases from the upstream side to the downstream side in the traveling direction of the electron beam 15, that is, in a trumpet shape. The reason why the beam emission port 34 is formed in a trumpet shape is to allow the electron beam 15 to be deflected by the deflection lens 30. Specifically, an inner peripheral surface 34a of the beam emission port 34 is inclined at a predetermined angle with respect to the center axis 31 so that the electron beam 15 does not interfere with (contact) the inner peripheral surface 34a of the beam emission port 34 when the electron beam 15 is deflected by the deflection lens 30.

The beam irradiation device 14 includes a shield member 36. The shield member 36 is a member that covers the inner peripheral surface 34a of the beam emission port 34, and is formed in a trumpet shape to conform to the shape of the beam emission port 34. The shield member 36 is a member that prevents an evaporated substance to be described below from adhering to the inner peripheral surface 34a of the beam emission port 34. The shield member 36 covers the entire inner peripheral surface 34a. The components constituting the optical system 27 have limited heat-resistant temperatures and cannot thus be subjected to a very high temperature. On the other hand, in a case where the inner peripheral surface 34a of the beam emission port 34 is covered with the shield member 36, the shield member 36 exerts a heat insulating (heat shielding) effect on the optical system 27. Therefore, the components of the optical system 27 can be protected from heat.

The powder supply device 16 is a device that supplies the powder 32 of metal, which is a raw material for a build object 38, onto the build table 18. The powder supply device 16 includes a hopper 16a, a powder dropper 16b, and a squeegee 16c. The hopper 16a is a chamber for storing powder. The powder dropper 16b is a unit that drops the powder stored in the hopper 16a onto the build table 18. The powder dropper 16b drops a predetermined amount of powder to the end of the build table 18. The squeegee 16c is an elongated member elongated in the Y direction. The squeegee 16c spreads the powder dropped by the powder dropper 16b on the build table 18. The squeegee 16c is provided to be movable in the X direction in order to uniformly spread the powder on the entire surface of the build table 18.

The build table 18 is horizontally arranged inside the chamber 12. The build table 18 is arranged further on the lower side than the powder supply device 16. An opening portion 18a is formed at the center portion of the build table 18. The opening portion 18a is formed in a circular shape in a planar view or in a quadrangular shape in a planar view. In the present embodiment, as an example, the opening portion 18a is formed in a circular shape in a planar view.

The build box 20 is a box that forms a build space on the lower side of the opening portion 18a of the build table 18. The upper end portion of the build box 20 is connected to the lower surface of the build table 18 at the edge of the opening portion 18a. The lower end of the build box 20 is connected to the bottom wall 12c of the chamber 12.

The stage 22 is a stage for forming the three-dimensional build object 38 using the powder 32 of metal. The stage 22 is formed in a circular shape in a planar view to conform to the shape of the opening portion 18a of the build table 18. The stage 22 includes an upper surface 22a and a lower surface 22b. In a case where the build object 38 is formed by the three-dimensional PBF-AM apparatus 10, the powder 32 is spread with a predetermined thickness on the upper surface 22a of the stage 22. The predetermined thickness corresponds to a thickness of one layer in a case where the three-dimensional build object is formed by stacking one layer at a time. The upper surface 22a of the stage 22 is arranged to be opposed to the beam irradiation device 14 in the Z direction. The lower surface 22b of the stage 22 is arranged to be opposed to the bottom wall 12c of the chamber 12 in the Z direction.

The stage moving device 24 is a device that moves the stage 22 in the up-down direction. The stage moving device 24 includes a shaft 24a and a drive mechanism 24b. The shaft 24a is connected to the lower surface 22b of the stage 22. The drive mechanism 24b is driven using a not-illustrated motor as a drive source to move the stage 22 in the up-down direction integrally with the shaft 24a. Note that the drive mechanism 24b can be arranged outside the chamber 12 by allowing the shaft 24a to penetrate the bottom wall 12c of the chamber 12.

As illustrated in FIG. 2, a window 39 is provided in the upper wall 12a of the chamber 12. The window 39 is provided for observation of the inside of the chamber 12. The observation performed using the window 39 may be or may not be accompanied by measurement, and any of the cases may be employed in the present embodiment. That is, in the present embodiment, the purpose of the observation, the manner of the observation, and the method of the observation are not limited. The window 39 may have any configuration as long as transparency suitable for observation of the inside of the chamber 12 is secured, and the number of the windows 39 is not limited to one and may be plural. For example, although not illustrated, the window 39 has a configuration in which at least one opening formed in the upper wall 12a of the chamber 12 is closed using colorless and transparent lead glass for X-ray shielding. The lead glass for X-ray shielding may be directly attached to the upper wall 12a of the chamber 12, or may be attached to an observation member attached to the upper wall 12a so as to close the opening portion of the chamber 12.

The window 39 is provided to be displaced in the horizontal direction (Y direction in the illustrated example) from the beam irradiation device 14. A device (not illustrated) for observation of the inside of the chamber 12 through the window 39 is attached to the upper surface of the upper wall 12a of the chamber 12. Examples of the device for observation include a camera and lighting, and various sensors.

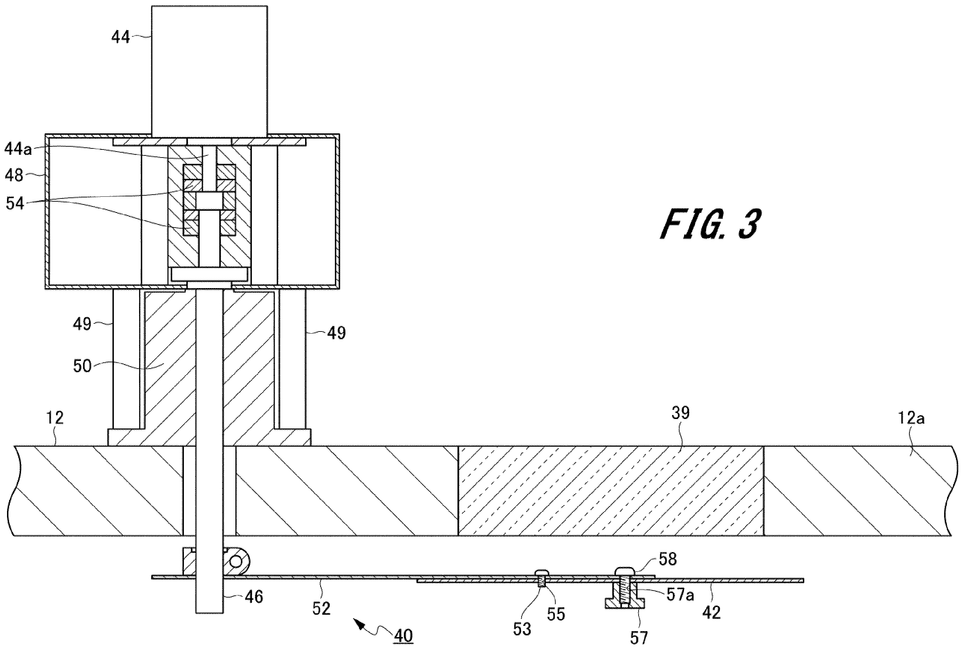

FIG. 3 is a longitudinal cross-sectional view illustrating a main part of the three-dimensional PBF-AM apparatus according to the embodiment of the present invention.

As illustrated in FIG. 3, a shutter 42 is arranged inside the chamber 12. Specifically, the shutter 42 is arranged on the lower surface side of the upper wall 12a of the chamber 12. The shutter 42 operates in accordance with driving of a motor 44 to open and close the window 39. The opening and closing of the window 39 includes both a case where the window 39 is closed for protection of the window 39 from contamination due to adhesion of an evaporated substance, heat accompanying beam irradiation, and the like, and a case where the window 39 is opened for observation of the inside of the chamber 12 through the window 39.

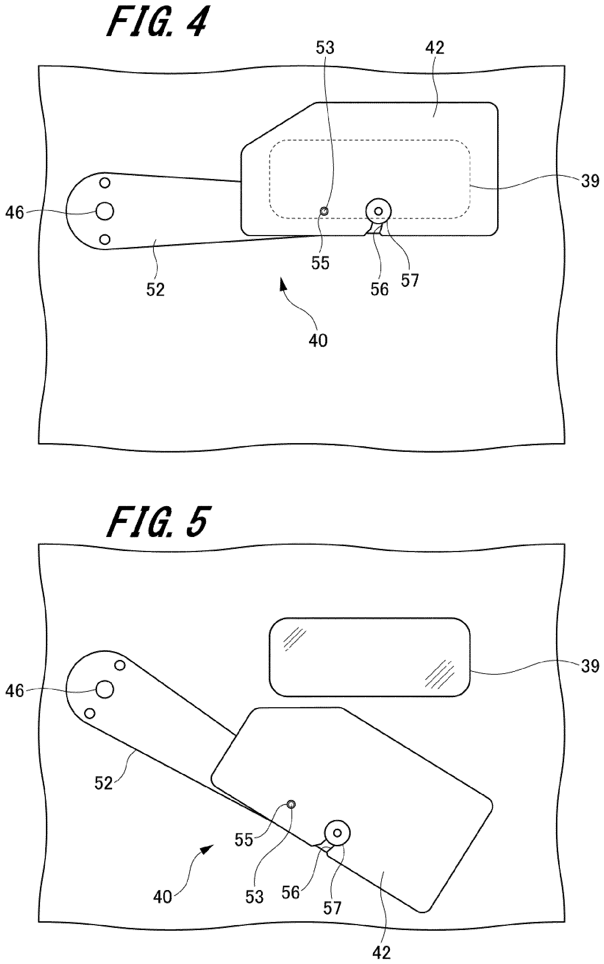

The shutter 42 operates in a space between a closed position to shield the window 39 as illustrated in FIG. 4 and an open position to expose (open) the window 39 as illustrated in FIG. 5 as the upper wall 12a of the chamber 12 is viewed from the lower side. In the present embodiment, as an example, the operation of the shutter 42 is a rotational movement operation. However, the operation of the shutter 42 is not limited to the rotational movement operation, and may be, for example, a linear movement operation or an opening/closing movement operation using a not-illustrated hinge. That is, the operation of the shutter 42 may be any operation as long as the shutter 42 can open and close the window 39.

The operation of the shutter 42 in the present embodiment is a rotational movement operation about the rotation center axis of a connecting shaft 46. The connecting shaft 46 is a shaft that rotates in accordance with driving of the motor 44. The motor 44 is provided as an example of a drive source for operating the shutter 42. The connecting shaft 46 constitutes a shutter mechanism 40 together with the shutter 42 and the motor 44. Hereinbelow, the configuration of the shutter mechanism 40 will be described in detail. Note that, in the following description, opening and closing the window 39 and opening and closing the shutter 42 have substantially the same meaning.

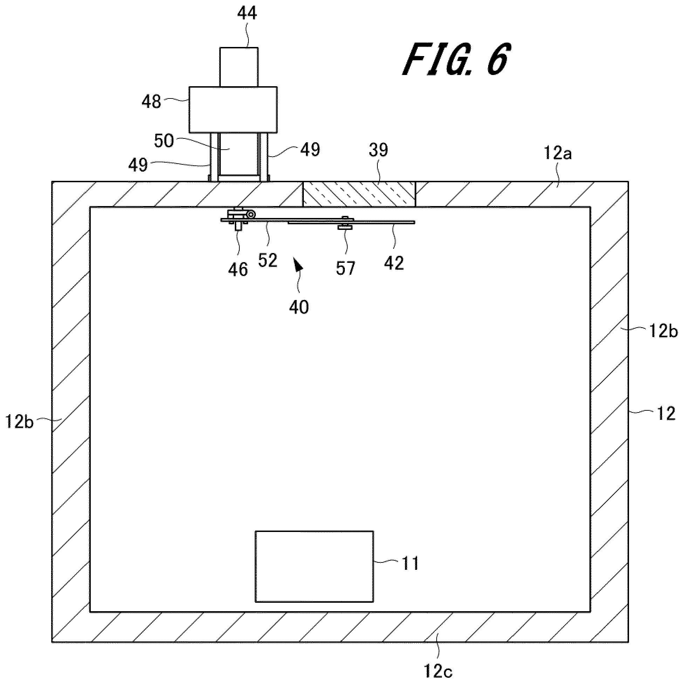

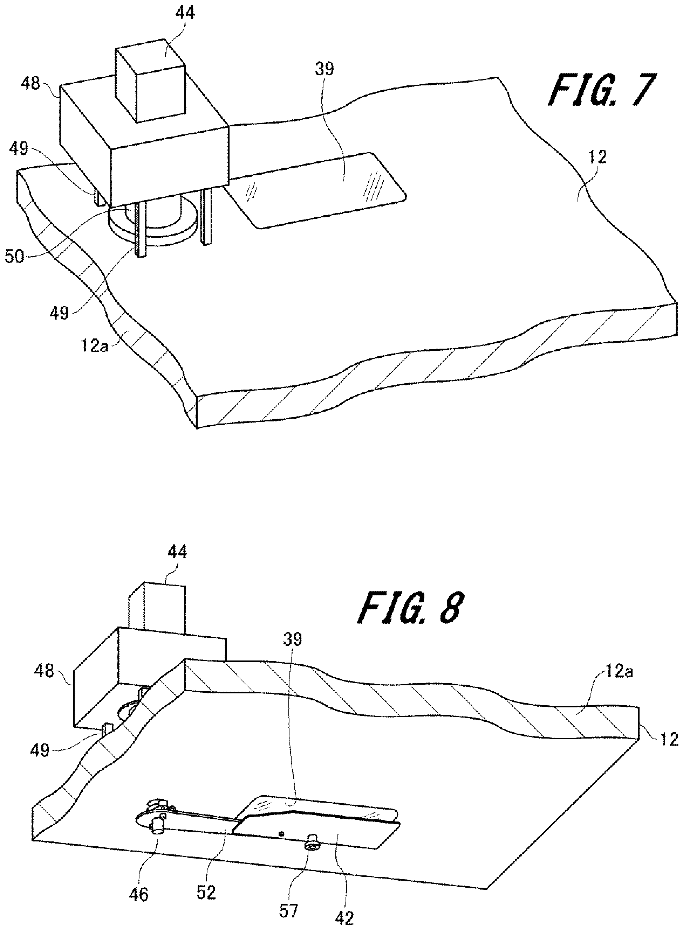

FIG. 6 is a schematic side cross-sectional view illustrating arrangement of the shutter mechanism 40. Also, FIG. 7 is a perspective view of the arrangement of the shutter mechanism 40 as viewed further from the upper side than the upper wall 12a of the chamber 12, and FIG. 8 is a perspective view of the arrangement of the shutter mechanism 40 as viewed further from the lower side than the upper wall 12a of the chamber 12. Note that reference sign 11 in FIG. 6 schematically indicates a portion serving as a contamination source or a heat source inside the chamber 12. A main contamination source or heat source when a build object is formed in the three-dimensional PBF-AM apparatus 10 is present on the stage 22 irradiated with the electron beam 15.

As illustrated in FIGS. 6 to 8, the shutter mechanism 40 includes a motor mount unit 48, a rotary motion feedthrough 50, and an arm 52 in addition to the shutter 42, the motor 44, and the connecting shaft 46 described above. The motor 44 is mounted on the motor mount unit 48.

The motor mount unit 48 is attached to the upper wall 12a of the chamber 12 by a plurality of (four in the present embodiment) support legs 49. As illustrated in FIG. 3, an output shaft 44a of the motor 44 is connected to the connecting shaft 46 by a coupling member 54. The output shaft 44a of the motor 44 and the connecting shaft 46 are coaxially arranged. As a result, the connecting shaft 46 rotates integrally with the output shaft 44a of the motor 44.

The connecting shaft 46 is a shaft that connects the motor 44 with the arm 52. The rotary motion feedthrough 50 is a unit that conducts the connecting shaft 46 from the outside to the inside of the chamber 12 while maintaining airtightness in the chamber 12. The arm 52 is attached to the lower end of the connecting shaft 46. The arm 52 is arranged further on the lower side than the upper wall 12a of the chamber 12 and parallel to the lower surface of the upper wall 12a. When the connecting shaft 46 is rotated by driving of the motor 44, the arm 52 swings in accordance with the rotation of the connecting shaft 46.

The shutter 42 is detachably attached to the arm 52. The shutter 42, the arm 52, and the connecting shaft 46 are each made of metal (including alloy) for antistatic purposes. As illustrated in FIG. 3, a positioning screw 53 as a positioning member is attached to the arm 52. The positioning screw 53 is a screw for positioning the shutter 42. The positioning screw 53 is secured to the arm 52 by engaging the positioning screw 53 with a screw hole formed in the arm 52 and fastening the positioning screw 53. The male screw portion of the positioning screw 53 penetrates the arm 52 and protrudes downward. On the other hand, a positioning hole 55 is formed in the shutter 42. The positioning hole 55 penetrates the shutter 42 in the thickness direction. The shutter 42 is positioned by fitting the positioning hole 55 to the male screw portion of the positioning screw 53.

As illustrated in FIGS. 4 and 5, the shutter 42 is provided with a cutout portion 56.

The cutout portion 56 is formed in an arc shape, centering on the positioning hole 55. A rotary fastener 57 is attached to the cutout portion 56. The fastener 57 is a member having a T-shaped cross section and having a screw hole 57a (refer to FIG. 3). The male screw portion of a set screw 58 (refer to FIG. 3) is engaged with the screw hole 57a of the fastener 57. The male screw portion of the set screw 58 is engaged with the screw hole 57a of the fastener 57 through a through hole formed in the arm 52 and the cutout portion 56 formed in the shutter 42.

In order to attach the shutter 42 to the arm 52, the end of the cutout portion 56 of the shutter 42 first abuts on the male screw portion of the set screw 58 in a state where the positioning hole 55 of the shutter 42 is fitted to the male screw portion of the positioning screw 53. Subsequently, the fastener 57 is rotated in one direction (for example, a clockwise direction) to be tightened. As a result, the shutter 42 and the arm 52 are sandwiched between the fastener 57 and the set screw 58. The shutter 42 is thus secured by the tightening force of the fastener 57. In this manner, the shutter 42 can be attached to the arm 52.

On the other hand, in order to detach the shutter 42 from the arm 52, the fastener 57 is first rotated in the other direction (for example, a counterclockwise direction) to loosen the tightening force of the fastener 57. Subsequently, the shutter 42 is rotated about the male screw portion of the positioning screw 53 to detach the cutout portion 56 of the shutter 42 from the fastener 57. In this manner, the shutter 42 can be detached from the arm 52.

In the shutter mechanism 40 configured as described above, in a case where the window 39 of the chamber 12 is to be protected, the shutter 42 is closed by driving of the motor 44. As a result, the window 39 is shielded by the shutter 42. Therefore, the window 39 provided in the chamber 12 can be protected without using a colored film. Also, in a case where the inside of the chamber 12 is to be observed through the window 39, the shutter 42 is opened by driving of the motor 44. As a result, the window 39 is opened. Therefore, the inside of the chamber 12 can directly be observed through the window 39 provided in the chamber 12. Therefore, it is possible to accurately observe the appearance and state of the inside of the chamber 12 as compared with a case of observing the inside of the chamber 12 through a colored film.

Also, the shutter 42 is formed to be detachable from the arm 52. Accordingly, in a case where the shutter 42 is contaminated due to adhesion of an evaporated substance (described below) generated from the contamination source, the shutter 42 can be replaced.

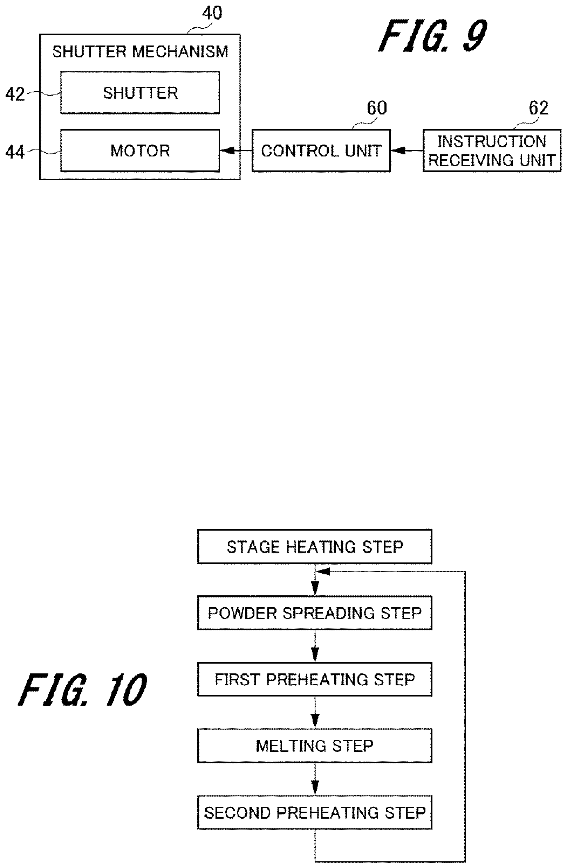

FIG. 9 is a block diagram illustrating a configuration of a shutter control circuit according to the embodiment of the present invention.

As illustrated in FIG. 9, a control unit 60 is connected to the motor 44 of the shutter mechanism 40. The control unit 60 controls the operation of the shutter 42 by driving the motor 44 on the basis of a preset condition. The control unit 60 includes, for example, computer hardware such as a CPU, a ROM, and a RAM.

An instruction receiving unit 62 is connected to the control unit 60. The instruction receiving unit 62 includes, for example, a user interface such as an operation panel, and receives an opening/closing instruction of the shutter 42. The opening/closing instruction of the shutter 42 includes an instruction to open the shutter 42 and an instruction to close the shutter 42. The instruction to open the shutter 42 is an instruction to open the window 39 by moving the shutter 42 arranged at the closed position to the open position. The instruction to close the shutter 42 is an instruction to shield the window 39 by moving the shutter 42 arranged at the open position to the closed position. The instruction receiving unit 62 notifies the control unit 60 of the content of the opening/closing instruction received from the user. In response to this notification, the control unit 60 controls the operation of the shutter 42 in accordance with the opening/closing instruction that the instruction receiving unit 62 has received.

Next, a method for forming a build object using the three-dimensional PBF-AM apparatus according to the embodiment of the present invention (a three-dimensional PBF-AM method) will be described.

A process for forming a three-dimensional build object using the three-dimensional PBF-AM apparatus 10 is performed in the order of a stage heating step → a powder spreading step → a first preheating step → a melting step → a second preheating step, as illustrated in FIG. 10, when a manufacture preparation step and a build object taking-out step are excluded. After the second preheating step is performed, the process returns to the powder spreading step, and thereafter, the first preheating step, the melting step, and the second preheating step are repeated every time one layer of the powder 32 is spread on the stage 22 in the powder spreading step. Also, the steps from the powder spreading step to the second preheating step are repeated a predetermined number of times (the number of layers). Hereinbelow, each of the steps will be described in order.

### (Stage Heating Step)

In the stage heating step, the upper surface 22a of the stage 22 is irradiated with the electron beam 15 by the beam irradiation device 14 to heat the stage 22.

### (Powder Spreading Step)

In the powder spreading step, the powder 32 of metal is supplied onto the build table 18 by the powder supply device 16 in a state where the upper surface 22a of the stage 22 is lowered further by a predetermined amount than the upper surface of the build table 18. At this time, the powder stored in the hopper 16a is dropped onto the build table 18 by the powder dropper 16b. The powder 32 dropped on the build table 18 is spread on the build table 18 by movement of the squeegee 16c. The squeegee 16c passes over the stage 22 during the movement. Therefore, the powder 32 is spread on the stage 22 as well.

### (First Preheating Step)

In the first preheating step, the powder 32 on the stage 22 is irradiated with the electron beam 15 by the beam irradiation device 14 to calcine the powder 32. At this time, the beam irradiation device 14 causes the electron beam 15 to be scanned in a wider range than the target build object, for example, the entire powder 32 on the stage 22 to calcine the powder 32 on the stage 22. The first preheating step is also referred to as a powder-heat step.

### (Melting Step)

In the melting step, the powder 32 on the stage 22 is irradiated with the electron beam 15 by the beam irradiation device 14 to melt and solidify the powder 32. At this time, the beam irradiation device 14 causes the electron beam 15 to be scanned based on two-dimensional data obtained by slicing three-dimensional CAD (Computer-Aided Design) data of a target build object to a certain thickness to selectively melt the powder 32 on the stage 22. The powder 32 melted by the irradiation of the electron beam 15 is solidified after the electron beam 15 passes. Consequently, manufacture of one layer is completed. Also, when the powder 32 of metal is irradiated with the electron beam 15 in the melting step, part of the melted metal becomes an evaporated substance and rises in a mist form. The evaporated substance adheres to the inner wall of the chamber 12 and contaminates the inner wall. That is, the evaporated substance becomes a contaminant.

### (Second Preheating Step)

In the second preheating step, the build object on the stage 22 is irradiated with the electron beam 15 in preparation for formation of a subsequent layer to raise the temperature of the build object. The second preheating step is also referred to as an after-heat step.

In a step, out of the aforementioned steps, in which a predetermined number or more of contaminants are estimated to be generated, the control unit 60 controls the operation of the shutter 42 so that the window 39 is closed by the shutter 42. The predetermined amount or more of contaminants refer to contaminants that may adversely affect observation of the inside of the chamber 12 due to adhesion to the window 39. Also, in a step in which a predetermined amount or more of heat is estimated to be generated, the control unit 60 controls the operation of the shutter 42 so that the window 39 is closed by the shutter 42. The predetermined amount or more of heat refers to an amount of heat that may damage the window 39 due to direct incidence of heat. In the present embodiment, a case will be described as an example in which both the step in which a predetermined number or more of contaminants are estimated to be generated and the step in which a predetermined amount or more of heat is estimated to be generated are the melting step.

The control unit 60 controls driving of the motor 44 in the following manner.

First, the control unit 60 controls driving of the motor 44 so that the shutter 42 is arranged at the open position in each of the stage heating step, the powder spreading step, the first preheating step, and the second preheating step and so that the shutter 42 is arranged at the closed position in the melting step. Also, when starting the melting step, the control unit 60 drives the motor 44 to move the shutter 42 from the open position to the closed position. As a result, the window 39 is covered by the shutter 42. Also, when ending the melting step, the control unit 60 drives the motor 44 to move the shutter 42 from the closed position to the open position. As a result, the window 39 is opened.

In this manner, the shutter 42 is automatically opened and closed by means of the control unit 60 to enable the window 39 to be protected from the contamination source and the heat source in the melting step. Specifically, the window 39 can be protected by the shutter 42 so that the evaporated substance generated in the melting step does not adhere to the window 39. In addition, the window 39 can be protected by the shutter 42 so that the heat generated in the melting step is not directly incident on the window 39. Also, the control unit 60 controls the operation of the shutter 42 on the basis of a preset condition. Therefore, it is not necessary for the user to manually operate the shutter 42. Accordingly, the window 39 can be protected from the contamination source and the heat source without user intervention. In particular, in a case of forming a build object using the three-dimensional PBF-AM apparatus 10, the number of times of stacking the powder 32 is very large, and it may thus take several hours to several days from the start to the end of manufacture. Even in such a case, the control unit 60 automatically opens and closes the shutter 42 on the basis of a predetermined condition to enable the window 39 of the chamber 12 to be reliably protected from contamination and heat.

Also, when the instruction receiving unit 62 receives an opening/closing instruction of the shutter 42 from the user, the control unit 60 drives the motor 44 on the basis of the instruction content to control the operation of the shutter 42. For example, when the instruction receiving unit 62 receives an instruction to open the shutter 42 from the user under a situation where the shutter 42 is arranged at the closed position, the control unit 60 drives the motor 44 to move the shutter 42 from the closed position to the open position. Also, when the instruction receiving unit 62 receives an instruction to close the shutter 42 from the user under a situation where the shutter 42 is arranged at the open position, the control unit 60 drives the motor 44 to move the shutter 42 from the open position to the closed position.

In this manner, by operating the shutter 42 in accordance with an opening/closing instruction of the shutter 42 by the user, the inside of the chamber 12 can be observed when the user wishes, and the window 39 can be protected from the contamination source and the heat source. Therefore, the usability of the three-dimensional PBF-AM apparatus 10 can be improved.

### [Modification Examples and the Like]

The technical scope of the present invention is not limited to the above-described embodiment, and includes a mode in which various modifications and improvements are added within a range in which specific effects obtained by the components of the invention and the combination thereof can be derived.

For example, in the above embodiment, the window 39 is closed by the shutter 42 when the melting step is started, but the timing of closing the shutter 42 does not necessarily coincide with the start timing of the melting step, and may be slightly before or slightly after the start of the melting step. Similarly, the timing of opening the shutter 42 does not necessarily coincide with the end timing of the melting step, and may be slightly before or slightly after the end of the melting step.

Also, in the above embodiment, only the melting step has been given as the step of closing the window 39 by the shutter 42, but the present invention is not limited thereto, and the window 39 may also be closed by the shutter 42 in a step other than the melting step, for example, the first preheating step and the second preheating step. That is, the number of steps to close the shutter 42 is not limited to one, and may be plural. In addition, since process parameters applied to each step differ depending on the material used as the powder 32 of metal, controls may be taken so that the shutter 42 is closed in a plurality of steps depending on the material. An example case of closing the shutter 42 in a plurality of steps may include a case of using the powder 32 of a high melting point metal.

Also, in the above embodiment, the configuration in which the shutter 42 is automatically opened and closed by the control unit 60 has been described as an example, but the present invention is not limited thereto, and a configuration in which the shutter 42 is opened and closed by a manual operation of the user may be employed. Also, a drive source for opening and closing the shutter 42 may be an actuator other than the motor.

### Description of Symbols

- 10: Three-dimensional powder bed fusion additive manufacturing (PBF-AM) apparatus
- 12: Chamber
- 22: Stage
- 39: Window
- 42: Shutter
- 44: Motor (drive source)
- 60: Control unit
- 62: Instruction receiving unit

## Claims

1. A three-dimensional powder bed fusion additive manufacturing apparatus comprising:
a chamber (12) provided inside with a stage (22) for forming a three-dimensional build object;
a window (39) provided in the chamber (12) for observation of the inside of the chamber (12); and
a shutter (42) arranged inside the chamber (12) to open and close the window (39).

2. The three-dimensional powder bed fusion additive manufacturing apparatus according to claim 1, comprising:
a drive source (44) configured to operate the shutter (42); and
a control unit (60) configured to control an operation of the shutter (42) by driving the drive source (44) on a basis of a preset condition.

3. The three-dimensional powder bed fusion additive manufacturing apparatus according to claim 1, wherein the shutter (42) is detachable.

4. The three-dimensional powder bed fusion additive manufacturing apparatus according to claim 2, wherein the control unit (60) controls the operation of the shutter (42) so that the window (39) is closed by the shutter (42) in a step in which a predetermined number or more of contaminants are estimated to be generated out of a plurality of steps repeated every time one layer of powder is spread on the stage (22).

5. The three-dimensional powder bed fusion additive manufacturing apparatus according to claim 2, wherein the control unit (60) controls the operation of the shutter (42) so that the window (39) is closed by the shutter (42) in a step in which a predetermined amount or more of heat is estimated to be generated out of a plurality of steps repeated every time one layer of powder is spread on the stage (22).

6. The three-dimensional powder bed fusion additive manufacturing apparatus according to claim 2, comprising:
an instruction receiving unit (62) configured to receive an opening/closing instruction of the shutter (42) from a user,
wherein the control unit (60) controls the operation of the shutter (42) in accordance with the opening/closing instruction that the instruction receiving unit (62) has received.
